Europäisches Patentamt

European Patent Office

Office européen des brevets

(11) Publication number: **0 029 368**
**B1**

(12) **EUROPEAN PATENT SPECIFICATION**

(45) Date of publication of patent specification: **25.02.87**

(51) Int. Cl.⁴: **F 16 K 5/00**

(21) Application number: **80304114.4**

(22) Date of filing: **17.11.80**

(54) **Method of insertion or removal of a valve plug.**

(30) Priority: **19.11.79 GB 7939902**
**11.12.79 GB 7942681**
**29.12.79 GB 7944579**

(43) Date of publication of application:
**27.05.81 Bulletin 81/21**

(45) Publication of the grant of the patent:
**25.02.87 Bulletin 87/09**

(84) Designated Contracting States:
**AT BE CH DE FR IT LI LU NL SE**

(56) References cited:
**DE-B-1 228 478**
**US-A- 791 256**
**US-A-3 529 807**
**US-A-3 589 679**
**US-A-3 626 576**

(73) Proprietor: **E.V.S. (Valves) Limited**
**St. Pauls Enterprise Workshop Winkworth Place**
**St. Pauls, Bristol (GB)**

(72) Inventor: **Evans, Gerald John**
**Beechwood Cadbury Camp Lane**
**Clapton-in-Gordano, Portishead, Bristol (GB)**

(74) Representative: **Carpmael, John William**
**Maurice et al**
**CARPMAELS & RANSFORD 43 Bloomsbury**
**Square**
**London, WC1A 2RA (GB)**

Courier Press, Leamington Spa, England.

## Description

This invention relates to a fluid valve arrangement and particularly to a method for inserting or removing a valve plug.

It is common practice in all types and sizes of cut-off valves to provide a valve element which serves to cut-off the flow of fluid through the pipework in which the valve is mounted, and also to provide means for moving the valve element into and out of its operative position, this means including threaded spindles, packing and sealing members.

Such a valve is described in US—A—3 589 679. In this specification is shown a plug valve insertable through an aperture in a pipe, but no means is shown in this specification for replacing the plug valve without first turning off the fluid flow through the pipe.

It is among the objects of the present invention to provide a method by which the valve member can be inserted or removed without the necessity for turning off the fluid supply.

In another field, US—A—3 626 576 discloses a similar method for repairing walls of gas mains.

According to the present invention, there is a method of inserting a valve member or plug as set out in claim 1 and for its removal as set out in claim 2.

The invention is illustrated by way of example in the accompanying drawings in which,

Figure 1 is a plan view of one embodiment of a valve body according to the invention;

Figure 2 is an elevation corresponding to Figure 1;

Figure 3 is a plan view of a blanking or cover plate for the valve body;

Figures 4, 5 and 6 are elevations respectively of a plug element, a plug valve element housing and an operating key;

Figures 7 and 8 are respectively a plan view and a side elevation of a gate valve;

Figure 9 is a side elevation showing one step in the operation of the valve arrangement;

Figure 10 is a side elevation showing a further step in the operation of the valve arrangement;

Figure 11 is an elevation of another embodiment of a valve body according to the invention;

Figure 12 is a section corresponding to Figure 11;

Figure 13 is an elevation of an operating key;

Figure 14 is a section through a plug valve element housing;

Figures 15 and 16 are sections through two different forms of plug valve element;

Figures 17 and 18 are respectively a plan view and a section through a gate valve;

Figures 19 and 20 are sections showing two of the steps in the operation of the valve arrangement;

Figure 21 is a side elevation of a further T-shaped valve arrangement embodying the invention,

Figure 22 is a section through a gate valve and a co-acting plug housing,

Figure 23 is an elevation of a plug valve element,

Figure 24 is an elevation showing a modified form of attachment of the gate valve housing to the plug valve housing,

Figure 25 is an elevation of a further modification of the gate valve housing,

Figures 26, 27 and 28 are elevations of further plug valve elements,

Figure 29 is a section through a ball valve which may be used in place of any of the gate valves previously described,

Figure 30 is a section through a valve housing for use with the ball valve shown in Figure 29,

Figure 31 is an isometric view, with parts cut away, of a cross-slide housing forming a dual gate valve which may be used with any of the previous embodiments of the invention, and

Figure 32 is an isometric sectional view of an alternative form of dome-shaped extraction housing embodying a hollow key which may also be used as a syphon tube.

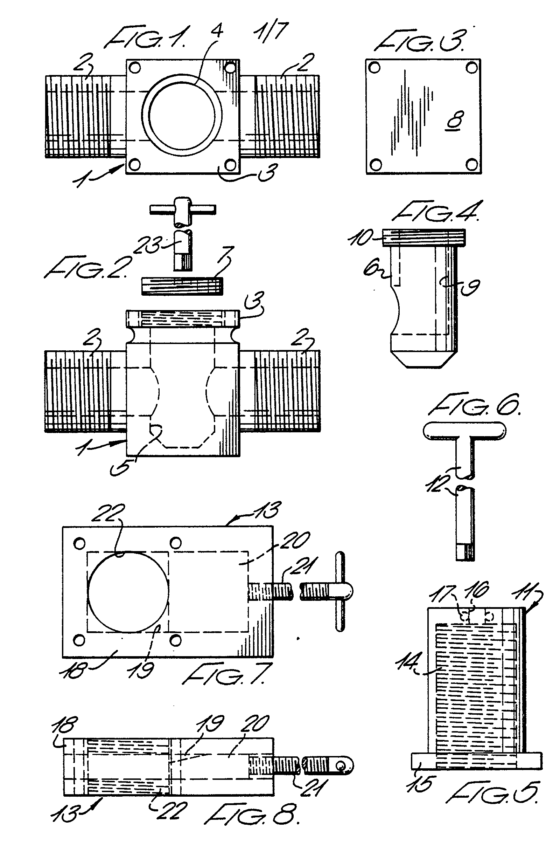

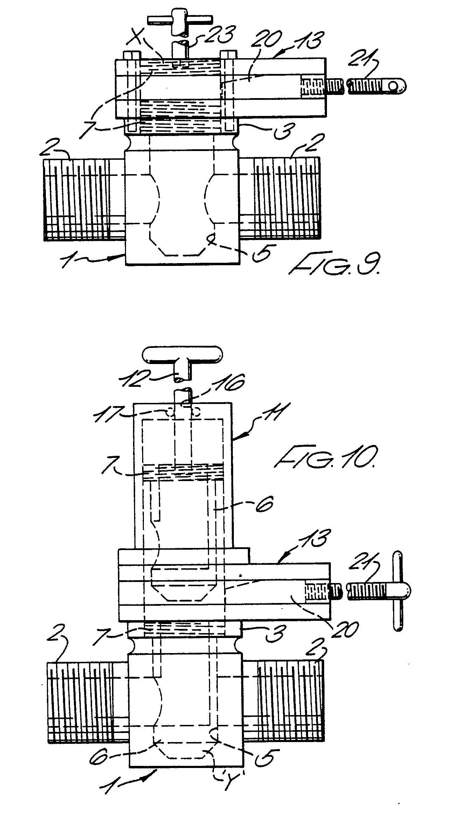

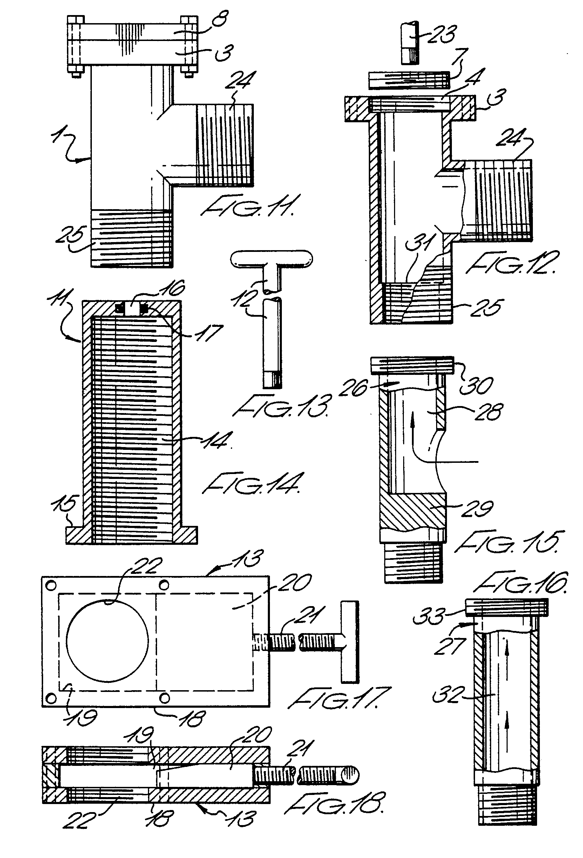

In Figures 1 to 10 of the drawings, there is shown a valve body 1 having oppositely disposed threaded spigots 2 by which the body is connected to the pipes of a pipework system, such as a central heating system. Although threaded spigots are shown, it will be obvious that other forms of connection, such as coacting bolted flanges, may be used.

One face of the body 1 is formed as a flat flange 3 which is provided with a threaded opening 4 communicating with a transverse bore 5 to receive a valve cut-off element in the form of a hollow plug 6. The opening 4 is closed by a removable threaded plug 7, which is preferably of a transparent plastics material, and is normally covered by a blanking or cover plate 8 secured to the flange 3 by bolts (not shown).

The apparatus described so far is part of the valve arrangement which is positioned in the pipework during normal operation thereof. Thus, a plurality of such valve bodies may be built into a pipework system at selected positions.

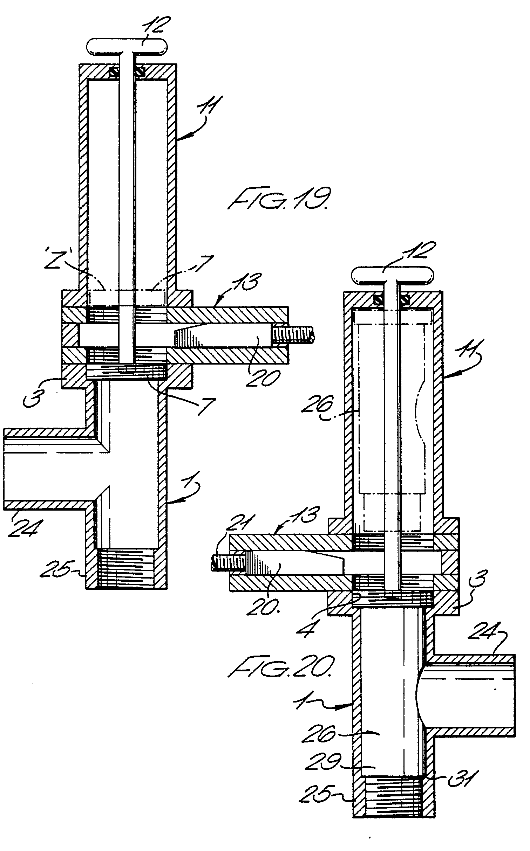

As shown in Figure 4, the hollow plug 6 is formed with a right-angled bore 9 and, at its upper end, has a screw-threaded portion 10.

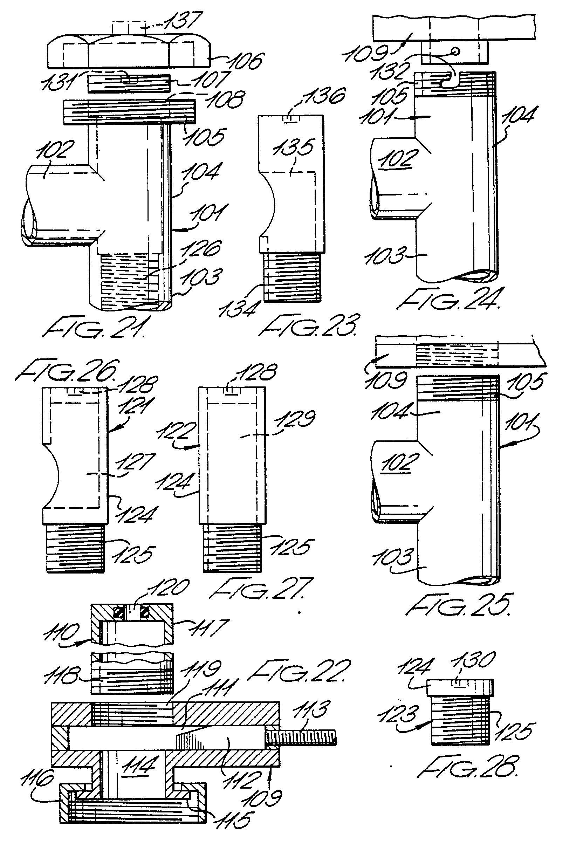

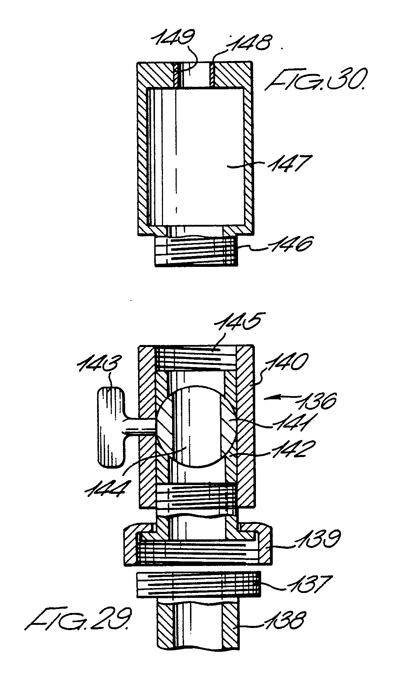

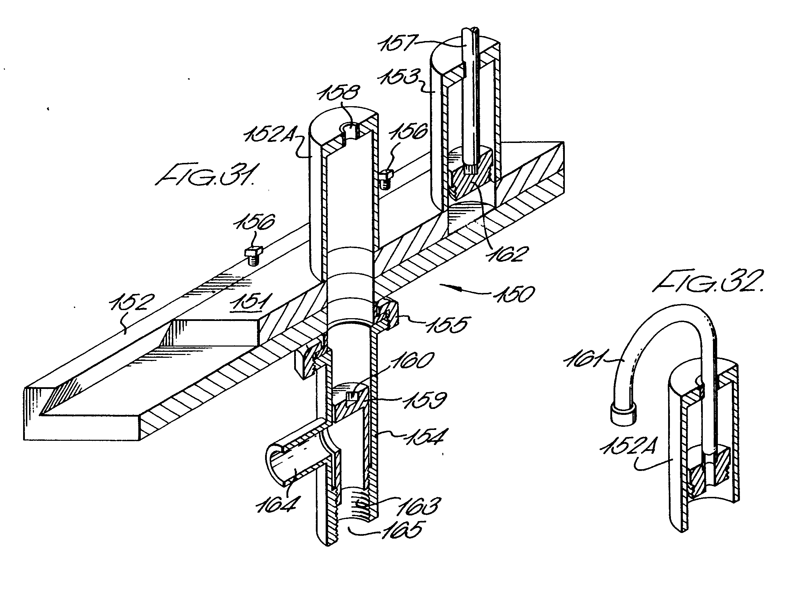

The arrangement further includes means for positioning the hollow plug 6 in the valve body 1 whilst the fluid in the pipework system is under pressure. Such means comprise a plug housing 11 as shown in Figure 5, an operating key 12 as shown in Figure 6 and a gate valve 13 as shown in Figures 7 and 8.

The plug housing 11 comprises an inverted cup-shaped member having an internal threaded bore 14 corresponding in diameter to that of the threaded portion 10 of the hollow plug 6, the lower end thereof being provided with an annular flange 15. The other end of the housing has a central opening 16 in which is fitted an annular seal 17 through which the key 12 can be passed with sliding, but pressure-tight, fit.

The gate valve 13 comprises a flat body 18 having a central slot 19 in which is received a valve member 20 which is movable in the slot by means of a screw-threaded operating spindle 21. The body 18 is formed with a transversely disposed screw-threaded hole 22 which corresponds in diameter to that of the threaded bore 14 of the plug housing 11 and also of the threaded opening 4 in the valve body 1. In this respect, the threads of the bore 14, the hole 22 and the opening 4 are made to match one another in order to provide a continuous thread.

In use, in order to position the hollow plug 6 in the valve body 1, the blanking or cover plate 8 is first removed and, using the same bolt holes, the gate valve 13 is bolted to the flange 3 as shown in Figure 9. With the valve member 20 in its open or inoperative position, a key 23 is fitted into a coacting recess in the removable plug 7 and the latter is unscrewed from the body 1, through the hole 22, into the position marked "X" in Figure 9. The valve member 20 is then moved into a closed or operative position where it stops the flow of fluid through the gate valve. The plug 7 can then be completely removed.

The hollow plug 6 is then screwed into the plug housing 11 and the latter is fixed, as by bolts passed through the flange 15, to the gate valve 13 as is shown in Figure 10. The key 12 is then inserted through the opening 16 to interengage with the bore 9 of the hollow plug 6. Bearing in mind the pressure-tight seal between the shank of the key 12 and the annular seal 17, the valve member 20 is moved into its open or inoperative position and, using the key 12, the hollow plug 6 is screwed downwards to the position marked "Y" in Figure 10 where it is seated in the transverse bore 5. The key 12 is moved upwardly until its leading end is above the positions of the valve member 20 and the valve member is again moved into its closed or operative position. The key 12 is then removed from the plug housing 11.

In this position, the hollow plug 6 serves to prevent flow of fluid through the valve body 1 in the manner of a normal plug valve.

In practice, in order to avoid draining off a complete pipework system for repair or maintenance, the present invention facilitates the draining off of a selected section of the system by inserting a hollow plug 6 in one or more valve bodies of the system. In this respect, it will be seen in Figure 10 that the bore 9 of the hollow plug 6 is open to the left and therefore the pipework to the left of the valve body 1 can be drained off under the control of the valve member 20. For this purpose the free end of the plug housing 11 may be provided to receive a draining hose or other draining means.

In the latter respect, the screw threads are provided to ensure that the bore 9 is facing in the correct direction. If it is required to drain the pipework to the right of the valve body in Figure 10, a second hollow plug 6 is provided to be positioned accordingly.

In view of the importance of providing a continuous thread through the plug housing 11, the gate valve 13 and the flange 3 of the valve body 1, suitable locating means, such as pegs and coacting holes will be provided between the valve body and the gate valve, and between the gate valve and the plug housing.

In order to remove the hollow plug 6, the procedure described above will be carried out in reverse.

Referring now to Figures 11 to 20 of the drawings, there is shown another embodiment of the invention in which the valve body 1 is T-shaped and has two spigots 24 and 25 disposed at a right angle to one another. In this embodiment, the valve cut-off elements are modified but the means for positioning the valve cut-off elements in the valve body are the same as that of the previous embodiment. Therefore, these means will not be described in relation to the present embodiment and the same reference numerals will be used therefore.

The valve cut-off element in this embodiment is in the form of a right angled plug member 26 as shown in Figure 15, or a straight-flow plug member 27 as shown in Figure 16. The plug member 26 has a right angled bore 28 with the lower end thereof being closed at 29. The other end of the member 26 is provided with a threaded portion 30 which coacts with the threaded bore of the plug housing 11 and with the key 12. As can be seen from Figure 20, when the plug member 26 is in position in the valve body 1, since the closed end 29 engages an annular seating 31 in the valve body, it stops flow through the spigot 25 but permits flow, for draining purposes, through the spigot 24 under the control of the valve member 20.

The plug member 27 has a see through bore 32 and, at its upper end, is formed with a threaded portion 33 which coacts with the threaded bore of the plug housing 11. When the plug member is in position in the valve body 1, it will be appreciated that it permits flow through the spigot 25 and cuts off flow through the spigot 24.

The embodiment of Figures 11 to 20 shows one variation in the procedure described with reference to the embodiment of Figures 1 to 10. In this respect, as can be seen in Figure 19, the plug housing 11 may first be positioned on the gate valve 13 without the plug member 26 or 27 and the removable plug 7 can be moved to the position marked "Z" within the plug housing 11. The plug housing 11 is then removed and, after removing the plug 7, is re-attached to the gate valve with the plug member 26 or 27 in position therein.

In both of the embodiments hereinbefore described, where one wishes only to cut off fluid flow, a solid plug member may be provided for use instead of the plug members 6, 26 and 27. Furthermore, in a central heating system, such a solid plug member may be used, at one end of each radiator in the system, as a regulating or control valve which can remain in the valve body.

Furthermore, in the embodiment of Figures 11 to 20, the plug member 26 may be replaced by a solid plug member of a length corresponding to that of the closed end 29 of the member 26 so that flow through the spigot 25 will be stopped but flow through the spigot 24 can continue under the control of the valve member 20. In this case, it will be necessary to extend the length of the threaded portion 4, or to provide a threaded portion in the lower part of the valve body.

In a further modification, which is applicable to both embodiments described, the internal threads 14 of the plug housings 11 may be dispensed with so that screwing of the plug members into the valve body can be effected using the thread 22 in the gate valve 13 and the threaded portion 4 only. In this respect, in order to effect final withdrawal of the plug member from the valve body, the leading end of the key 12 will be provided with a ball catch, or other suitable means such as a bayonet connection, to positively engage the plug member. In this respect, where such a positive connection is provided, the thread 22 in the gate valve 13 may also be dispensed with. ·

In a further modification, the plug housing may be connected to the gate valve by screw-threading instead of using bolts as hereinbefore described.

In a still further modification, the plug member may be of square or rectangular cross-section. In this case the key 12 would be in the form of a screw-threaded spindle coacting with a threaded bore in the plug member so that turning of the key 12 will raise and lower the plug member.

Thus, it will be understood that the present invention provides a valve arrangement in which, during normal operation of a pipework system, the valve is devoid of any moving parts which could be subject to corrosion and consequent jamming in one position. The use of the invention also has the advantage that it reduces overall costs in that, whereas a pipework system may include say twenty valve bodies 1, only say two or three valve cut-off elements need be provided with a corresponding number of cut-off element insertion means. It will of course be obvious that, where a system includes different sizes of pipe, the valve body and associated means will be adjusted for each pipe size.

In Figure 21 is shown a valve body 101 of T-shaped formation having three spigots 102, 103 and 104, spigots 102 and 103 having standard pipe connections, i.e. compression, threaded or soldered connections, and spigot 104 being externally threaded at 105 and receiving a blanking-off member 106, preferably of rubber or similar material inside a brass cap, to provide a final seal.

A main seal in the form of a threaded plug 107 is provided to be removably received in a threaded portion 108 in the spigot 104. With the plug 107 and the member 106 in position, the valve is in its normal position of use with no working parts within the valve body 101.

When it is required to cut-off the flow of fluid through the spigot 102 and/or 103, and/or to drain the pipework in which the valve is mounted either from spigot 102 or from spigot 103, a gate valve 109 and a plug housing 110, as shown in Figure 22, are provided.

The gate valve 109 comprises a flat body having a central slot 111 in which is received a gate member 112 which is movable between an open or inoperative position and a closed or operative position by means of a screw-threaded operating spindle 113. The flat body is formed with a transversely disposed opening 114, and the lower part thereof is provided with a flanged projection 115 on which is received a union nut 116.

The plug housing 110 comprises an inverted cup-shaped member 117 which at one end, has a screw-thread 118 to co-act with a screw-thread aperture 119 formed in the upper part of the flat body of the gate valve 109 coincident with the opening 114. The other end of the member 117 is formed with a central hole 120 through which is passed an operating key (not shown). The hole 120 is provided with an annular seal which slidably engages the key shaft in a watertight manner.

Furthermore, plug valve elements 121, 122 and 123 shown respectively in Figures 26, 27 and 28 are provided. The valve elements each comprise a body portion 124 and a threaded portion 125 which is adapted to engage a screw thread 126 formed in the spigot 103. The element 121 has a right angled bore 127 which is formed at 128 to co-act with the operating key, the element 122 has a through bore 129 which is formed at 128 to co-act with the operating key, and elementw 123 is solid and is formed with a recess 130 to co-act with the operating key.

In practice, if it is desired to drain off part of a pipework system or an appliance such as a central heating radiator to which the spigot 102 may be attached, for repair, maintenance, replacement, pressure testing, or for any other purpose, the following procedure is adopted.

The blanking-off member 106 is removed, the gate valve 109 is attached to the threaded part 105 of the body 101 by means of the union nut 116 and the plug housing 110 is screwed into the gate valve 109. In this position, with the gate member 112 open, the operating key, the end of which which co-acts with a recess 131 in the plug 107 is passed thcough the hole 120 to unscrew the plug 107 and to draw it into the plug housing 110. The gate member 112 is then closed, the plug housing 110 is removed from the gate valve 109 and the plug 107 removed from the plug housing.

One of the plug valve elements 121, 122 or 123 is then positioned in the plug housing 110 and the latter is again screwed into the gate valve 109. The operating key is passed through the hole 120 into engagement with valve element and the gate member 112 is opened. The valve element is then pushed through the opening 114 of the gate valve and screwed into the spigot 103. The key is removed and the gate member 112 is then closed.

Removal of the valve element is effected by reversing the above procedure.

The choice of valve element is dependent upon requirements. Thus, where it is required to drain off the pipework, or the appliance, through spigot 102, valve element 121 or 123 is used and, where it is required to drain off the pipework through spigot 103, valve element 122 is used. A drainage pipe or other fitting may be attached to the plug housing 110 or, with the plug housing removed, to the gate valve 109, and drainage effected under the control of the gate member 112.

Figures 24 and 25 show alternative methods of connecting the gate valve 109 to the valve body 101. Thus, in Figure 24, the connection is made by way of a bayonet fitting 132 and, in Figure 25, the gate valve is screwed directly onto the threaded portion 105 of the valve body.

In an alternative arrangement where it is required to have general control over flow of fluid through the valve, for example, where the spigot 102 is coupled to a central heating radiator, the plug valve element shown in Figure 23 may be used. This valve element comprises a body portion 133 and a screw-threaded portion 134 which co-acts with the screw thread 126 in the spigot 103, the body portion being formed with a right angled bore 135, and with a recess 136 which co-acts with the operating key. In this case, the valve element is of a non-corrosive material, for example a synthetic plastics material such as polypropylene, and can remain in the valve body 101 during normal usage of the valve.

In this case also, the removable plug 107 may be dispensed with, and control of flow from zero to maximum effected by turning the valve element about its longitudinal axis. For this purpose, the blanking-off member 106 is provided with a projection 137 shown in chain dot lines in Figure 21. The projection 137 is of a shape corresponding to that of the operating key and therefore co-acts with the recess 136. Therefore, in order to adjust the valve element the member 106 is removed, the projection is used to turn the valve element, and the final sealing member 106 is then replaced.

Whilst this arrangement allows a radiator, or a section of pipework to be cut off, it does not allow drainage thereof. Therefore, in order to effect drainage the plug valve element of Figure 23 must be replaced by one of the valve elements of Figures 26 to 28. This is effected in the manner hereinbefore described.

It will be obvious that the above arrangement, and the form of the connections, may also be applied to an in-line plug valve as shown in Figures 1 to 10.

In a further embodiment of the invention, the removable valve element may be provided in the form of a filter, for example by forming a part of the body portion thereof of wire or other mesh, or by forming the body portion to receive a wire or other mesh insert. Such a valve element may be used in for example a fuel line and provides the advantage that the filter can be removed for maintenance or replacement whilst the system is under pressure.

The gate valve 13 shown in the previous Figures such as Figures 7, 8 to 10, 17, 18, 19 and 20 and 109 shown in Figure 22 may be replaced by any other type of valve such as a plug valve, ball valve modified to enable the appropriate parts such as the plug 6, the plug 7 or 107 etc. to be withdrawn through it.

One example of an alternative valve is the ball valve illustrated in Figure 29. As in Figure 22, the ball valve 136 is adapted to be attached to the threaded flange 137 of a radiator valve 138 by a union 139. The ball valve 136 comprises a valve casing 140 and a ball valve member 141 in sealing contact with a valve liner 142. Ball valve member 141 is operable by a handle 143 and has a central passageway 144 of the same diameter as the bore of the radiator valve 138.

The upper end of valve casing 140 is threaded at 145 to receive a threaded flange 146 of a dome-shaped housing 147.

In use the ball valve housing is screwed on to the flange 137 of the radiator valve. The dome or housing 147 is then screwed into the upper end of the ball valve casing 140. With the ball valve 141 in the closed position an operating key (as described previously) may be inserted through a seal 148 in a bore 149 in the top of the housing 147. The valve 141 may then be turned to the position shown in the drawing and the operating key may then be passed through the passageway 144 so as to insert or remove a sealing plug, or a plug valve in the radiator valve, as required, and remove or replace it as described with reference to the other embodiments of the invention.

Instead of the ball valve a plug valve could be used with a similar passageway through it for the key to pass through.

In Figure 31 is shown an alternative form of dual gate valve 150 which consists of two plates machined in such a manner as to form a cross-slide 151 in a cross-slide housing 152 similar to that existing on normal production turning lathes. On the top of cross slide 151 are mounted two domes or housings 152A, 153 through which it is possible to pass items of equipment to carry out various operations. The dual gate valve 150 is attached to the radiator valve 154 by means of a union 155, which is situated on the underside of cross slide housing 152 after the blanking cap of the valve 154 has been removed. When the cross slide housing 152 has been secured to the top of the valve 154, fixing bolts 156 are slackened off to allow the cross-slide 151 to slide freely within cross slide housing 152.

One of the domes 152, 153 situated on the movable section Figure 4 is moved to a position directly in line with the valve body Figure 1. A key 157 is then passed through the sealable hole 158 in the top of the dome and the end of the key 157 is fitted into square aperture 160 in plug valve 159. The plug valve 159 is then withdrawn from the valve body into the dome housing. By pressing firmly on the cross slide 151 and sliding to one side this moves the dome with the plug valve inside away from the position directly over the valve and moves the other dome into its position directly over the top of the valve body.

Prior to the second dome being moved into this position other items of equipment such as the hollow syphon key 161 (Figure 32) which has a square end 162 similar to tommy bar 157 can be fitted into the dome.

The hollow syphon key 161 acts as a drain off point as the water flows through it to save further connections such as hoses. It is also possible to insert a small plug 162 (Figure 31) which can be fitted using a key or tommy bar. The plug is fitted on to one end of the tommy bar whilst in the dome housing and slid directly in line with the valve body. The plug is now inserted into the valve body using the tommy bar. The plug is screwed down into a thread 163 making sure the plug clears the outlet 164 but seal the outlet 165 preventing the flow of water from this direction. The tommy bar key is removed and the fluid can be drained off from any pipework beyond outlet 165 or if necessary from a radiator. By using the cross slide it enables the operative to carry out any of the operations previously described.

Other applications of the valves described above are, for example, to flowmeters and other types of instrumentation, filters, pumps, hydraulic motors.

The invention may be applied to such valves whether the valves are made in one part, two parts or more. For example the invention may be applied to sprinkler valves or fittings made in two or more parts.

The internal threads in the base of the plug housing and in the gate valve are not essential and may in some cases be omitted.

**Claims**

1. A method of inserting a valve member or plug (6) into an in-line valve body (1) adapted to receive said valve or plug member (6) via a normally plugged aperture (4), the valve body (1) being located in a pipe or conduit (2) containing fluid under pressure, the valve or plug member (6) being thereby positioned inside the pipe or conduit to control flow through the pipe or conduit characterised by the following steps:—

a) sealingly placing a housing (13) containing an additional valve (20) over the plugged aperture (4) in the valve body;

b) sealingly moving the plug plugging the aperture (4) through the valve (20) into the housing of the additional valve (20) or into an extraction housing (11) if one is provided on the additional valve, closing the additional valve (20) and completely removing the plug or the extraction housing containing the said plug;

c) placing a sealed extraction housing (11) over the additional valve housing (13), the extraction housing being provided with the valve or plug member (6) therein;

d) opening the additional valve (20);

e) using a tool (12) which passes through a sealed aperture (16) in the extraction housing (11), to move the valve member (6) into the valve body (1) through the additional valve (20) from the extraction housing (11);

f) removing the tool through the additional valve (20);

g) removing the additional valve from the pipe or conduit.

2. A method of removing a valve or plug member (6) from an in-line valve body (1) adapted to receive said valve or plug member (6) via a normally plugged aperture (4), the valve body being located in a pipe or conduit containing fluid under pressure, the valve or plug member (6) being initially positioned inside the pipe or conduit to control flow through the pipe or conduit characterised by reversing the steps set out in claim 1.

3. A method according to claim 1 characterised by this, that the additional valve (13) is a sliding plate valve (18, 19, 20).

4. A method according to claim 1 characterised by this, that the additional valve (13) is a ball valve (141) and the ball valve has a passageway (144) through it which is large enough to allow passage of said plug (7) and said valve member (6).

5. A method according to any of claims 1 to 4 and characterised by this, that the valve is a radiator valve.

6. A method according to any of claims 1 to 4 and characterised by this, that the valve is a drain or test valve for a sprinkler system.

7. A method according to claim 1 and characterised by this, that the valve member (27) has a straight through passage (32).

**Patentansprüche**

1. Verfahren zum Einsetzen eines Schieberteils oder Absperrglieds (6) in einen fluchtenden Ventilkörper (1), der so aufgebaut ist, um den Schieberteil oder das Absperrglied (6) über eine normalerweise verschlossene Öffnung (4) aufzunehmen, wobei der Ventilkörper in einem Rohr oder einer Leitung (2) angeordnet ist, die ein unter Druck stehendes fließendes Medium enthält, wobei der Schieberteil oder das Absperrglied (6) dadurch innerhalb des Rohrs oder der Leitung angeordnet wird, um den Durchfluß durch das Rohr oder die Leitung zu regeln, dadurch gekennzeichnet, daß das Verfahren folgende Schritte enthält:

a) abgedichtetes Anordnen eines Gehäuses (13), das einen zusätzlichen Absperrteil (20) enthält, über der verschlossenen Öffnung (4) im Ventilkörper;

b) abgedichtetes Bewegen des Verschlusses, der die Öffnung (4) verschließt, durch den Absperrteil (20) in das Gehäuse des zusätzlichen Absperrteils (20) oder in ein Extraktionsgehäuse (11), wenn ein solches auf dem zusätzlichen Absperrteil vorgesehen ist, Schließen des zusätzlichen Absperrteils (20) und vollständiges Entfernen des Verschlusses oder des Extraktionsgehäuses, das diesen Verschluß enthält;

c) Anordnen eines abgedichteten Extraktionsgehäuses (11) über dem Zusatzventilgehäuse (13), wobei der Schieberteil oder das Absperrglied (6) innerhalb des Extraktionsgehäuses vorgesehen ist;

d) Öffnen des zusätzlichen Absperrteils (20);

e) Verwenden eines Werkzeugs (12), das durch eine abgedichtete Öffnung (16) im Extraktionsgehäuse (11) läuft, um den Schieberteil (6) vom Extraktionsgehäuse (11) durch den zusätzlichen Absperrteil (20) in den Ventilkörper (1) zu bewegen;

f) Entfernen des Werkzeugs durch den zusätzlichen Absperrteil (20);

g) Entfernen des zusätzlichen Absperrteils vom Rohr oder der Leitung.

2. Verfahren zum Entfernen eines Schieberteils oder Absperrglieds (6) von einem fluchtenden Ventilkörper (1), der so aufgebaut ist, um den Schieberteil oder das Absperrglied (6) über in eine normalerweise verschlossene Öffnung (4) aufzunehmen, wobei der Ventilkörper in einem Rohr oder einer Leitung angeordnet ist, die ein unter Druck stehendes fließendes Medium enthält, wobei der Schieberteil oder das Absperrglied (6) anfangs innerhalb des Rohrs oder Leitung angeordnet ist, um den Durchfluß durch das Rohr oder die Leitung zue regeln, dadurch gekennzeichnet, daß die im Anspruch 1 dargelegten Schritte in umgekehrter Reihenfolge ausgeführt werden.

3. Verfahren gemäß Anspruch 1, dadurch gekennzeichnet, daß das Zusatzventil (13) ein Schieberplattenventil (18, 19, 20) ist.

4. Verfahren gemäß Anspruch 1, dadurch gekennzeichnet, daß das Zusatzventil (13) ein Kugelventil (141) ist, wobei das Kugelventil einen Durchlaß (144) besitzt, der groß genug ist, um den Verschluß (7) und den Schieberteil (6) durchzulassen.

5. Verfahren gemäß jedem der Ansprüche 1 bis 4, dadurch gekennzeichnet, daß das Ventil ein Heizkörperventil ist.

6. Verfahren gemäß jedem der Ansprüche 1 bis 4, dadurch gekennzeichnet, daß das Ventil ein Ablaßventil oder ein Prüfventil einer Sprikleranlage ist.

7. Verfahren gemäß Anspruch 1, dadurch gekennzeichnet, daß der Schieberteil (27) einen direkten Durchlaß (32) besitzt.

**Revendications**

1. Procédé pour introduire un obturateur ou tournant (6) dans un corps de valve en ligne (1) propre à recevoir l'obturateur ou tournant (6) par une ouverture (4) normalement fermée par un bouchon, le corps de valve étant installé dans une conduite (2) contenant du fluide sous pression, l'obturateur ou tournant (6) étant de ce fait placé dans la conduite pour régir l'écoulement dans cette conduite, caractérisé par les étapes suivantes:

a) on installe de manière étanche un boîtier (13) contenant une valve supplémentaire (20) sur l'ouverture fermée (4) dans le corps de valve.

b) on déplace de manière étanche le bouchon fermant l'ouverture (4) à travers la valve (20) dans le boîtier de cette valve supplémentaire (20) ou dans un boîtier d'extraction (11) si un tel boîtier est prévu sur la valve supplémentaire, on ferme la valve supplémentaire (20) et on retire complètement le bouchon ou le boîtier d'extraction contenant ce bouchon, on place, sur le boîtier de valve supplémentaire (13), un boîtier d'extraction étanche (11) qui contient l'obturateur ou tournant (6),

c) on ouvre la valve supplémentaire (20),

d) on utilise un outil (12) qui traverse une ouverture étanche (16) dans le boîtier d'extraction (11) pour déplacer l'obturateur (6) dans le corps de valve (1) à travers la valve supplémentaire (20) à partir du boîtier d'extraction (11),

f) on retire l'outil à travers la valve supplémentaire (20),

g) on démonte la valve supplémentaire de la conduite.

2. Procédé pour retirer un obturateur ou tournant (6) d'un corps de valve en ligne (1) propre à recevoir l'obturateur ou tournant (6) par une ouverture (4) normalement fermée par un bouchon, le corps de valve étant installé dans une conduite contenant du fluide sous pression, l'obturateur ou tournant (6) étant initialement positionné à l'intérieur de la conduite pour régir l'écoulement dans cette conduite, caractérisé en ce qu'on inverse les étapes indiquées dans le revendication 1.

3. Procédé suivant la revendication 1, caractérisé en ce que la valve supplémentaire (13) est une valve à obturateur coulissant (18, 19, 20).

4. Procédé suivant la revendication 1, caractérisé en ce que la valve supplémentaire (13) est une valve à tournant sphérique (141) et la valve à tournant sphérique comporte un passage (144) qui la traverse de part en part et qui est assez grand pour permettre le passage du bouchon (7) et de l'obturateur (6).

5. Procédé suivant l'une quelconque des revendications 1 à 4, caractérisé en ce que la valve est un robinet de radiateur.

6. Procédé suivant l'une quelconque des revendications 1 à 4, caractérisé en ce que la valve est un robinet de vidange ou d'essai pour une installation à sprinklers.

7. Procédé suivant la revendication 1, caractérisé en ce que l'obturateur (27) comporte un passage direct.

FIG.1. 4 1/7

2 2

1 3

FIG.3.

8

FIG.2.

23 7

2 2

1 5

FIG.4.

10

6 9

FIG.6.

12

FIG.7.

22 13

20

21

18 19

17 16 11

14

15 FIG.5.

18 19 20

21

13 22 FIG.8.

1

FIG. 9.

FIG. 10.

FIG.11.

FIG.12.

FIG.13.

FIG.14.

FIG.15.

FIG.16.

FIG.17.

FIG.18.

0 029 368

FIG.19.

FIG.20.

_4

FIG. 21.

FIG. 23.

FIG. 24.

FIG. 26.

FIG. 27.

FIG. 25.

FIG. 22.

FIG. 28.

FIG.30.

FIG.29.

FIG.31.

FIG.32.